(19) Europäisches Patentamt
European Patent Office
Office européen des brevets

(11) EP 2 148 894 B1

(12) EUROPEAN PATENT SPECIFICATION

(45) Date of publication and mention of the grant of the patent:
**29.02.2012 Bulletin 2012/09**

(21) Application number: **08755212.1**

(22) Date of filing: **09.05.2008**

(51) Int Cl.:
***C08G 18/00*** (2006.01) ***C08G 59/18*** (2006.01)
***C08G 59/40*** (2006.01) ***C08L 63/00*** (2006.01)
***C08L 63/02*** (2006.01) ***C08L 75/04*** (2006.01)
***C08L 79/00*** (2006.01)

(86) International application number:
**PCT/US2008/063177**

(87) International publication number:
**WO 2008/144252 (27.11.2008 Gazette 2008/48)**

(54) **FLAME RETARDANT COMPOSITION**

FLAMMENHEMMENDE ZUSAMMENSETZUNGEN

COMPOSITION IGNIFUGE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.05.2007 US 930494 P**

(43) Date of publication of application:
**03.02.2010 Bulletin 2010/05**

(73) Proprietor: **Dow Global Technologies LLC**
**Midland, MI 48674 (US)**

(72) Inventors:
- **LUDOVIC, Valette**
  **Shanghai 201702 (CN)**
- **ULRICH, Herold**
  **77815 Buhl (DE)**
- **HOEVEL, Bernd**
  **Sinzheim (DE)**

(74) Representative: **Raynor, John et al**
**Beck Greener**
**Fulwood House**
**12 Fulwood Place**
**London**
**WC1V 6HR (GB)**

(56) References cited:
**EP-A- 0 546 602** **WO-A-00/34351**
**US-A- 4 456 712** **US-A- 5 112 932**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 148 894 B1

## Description

Background of the Invention

The present invention relates to epoxy resin compositions and in particular to curable epoxy resin compositions for use in electrical laminate applications and electrical laminates prepared therefrom.

It is common practice to make electrical laminates and other fiber-reinforced composites from a fibrous reinforcement and an epoxy- containing matrix resin. A typical example of a process for making such a laminate may comprise the following steps:

(1) An epoxy-containing formulation is applied to or impregnated into a substrate by rolling, dipping, spraying, other known techniques and/or combinations thereof. The substrate is typically a woven or nonwoven fiber mat containing, for instance, glass fibers or paper. The epoxy resin formulation employed for impregnating is generally referred to as "varnish".

(2) The impregnated substrate is "B-staged" by heating at a temperature sufficient to draw off solvent in the epoxy-containing formulation and optionally to partially cure the epoxy-containing formulation, so that the impregnated substrate can be handled easily. The "B-staging" step is usually carried out at a temperature of from 90°C to 210°C and for a time of from 1 minute to 15 minutes. The impregnated substrate that results from B-staging is generally referred to as a "prepreg". The temperature used for "B-staging" is most commonly 100°C for composites and 130°C to 200°C for electrical laminates.

(3) One or more sheets of prepreg are stacked or laid up in alternating layers with one or more sheets of a conductive material, such as copper foil, if an electrical laminate is desired.

(4) The laid-up sheets are pressed at high temperature and pressure for a time sufficient to cure the resin and form a laminate. The temperature of this lamination step is usually between 100°C and 230°C, and is most often between 165°C and 200°C. The lamination step may also be carried out in two or more stages, such as a first stage between 100°C and 150°C and a second stage at between 165°C and 190°C. The pressure is usually between 50 N/$cm^2$ and 500 N/$cm^2$. The lamination step is usually carried out for a time of from 1 minute to 200 minutes, and most often for 45 minutes to 90 minutes. The lamination step may optionally be carried out at higher temperatures for shorter times (such as in continuous lamination processes) or for longer times at lower temperatures (such as in low energy press processes).

Optionally, the resulting laminate, for example, a copper-clad laminate, may be post-treated by heating for a time at high temperature and ambient pressure. The temperature of post-treatment is usually between 120°C and 250°C. The post-treatment time usually is between 30 minutes and 12 hours.

Various flame retardant additives are typically incorporated into the composition, such as bromine or phosphorous-containing components, in order to increase the flame retardancy of the final composition.

One type of flame retardant epoxy resin composition commonly used for electrical laminating applications comprises a brominated epoxy resin prepared from a diglycidyl ethers of bisphenol A and a tetrabromobisphenol A, dicyandiamide as a hardener, an organic solvent such as acetone, and an accelerator. The glass transition temperature of a cured epoxy resin prepared from such varnish compositions is undesirably low, for example from about 110°C to about 135°C. A low glass transition temperature results in a circuit board which is unsuitable for use at high temperatures.

A varnish composition for application to a reinforcing web used in the production of electrical laminates comprises a blend of a diglycidyl ether of bisphenol A and either bisphenol or tetrabromobisphenol A and a dicyandiamide as a hardener. The diglycidyl ether of bisphenol A is reacted in situ with bisphenol A and/or tetrabromobisphenol A and dicyandiamide during impregnation of the reinforcing web and the partial cure of the resin (see for example U.S. Pat. No. 3,738,862). This varnish composition leads to a laminate that also exhibits an undesirably low glass transition temperature (less than 135°C).

Another common material which is used in the electrical laminate industry is a so-called FR-4 (Flame resistant 4) resin. A FR-4 resin can be produced by reacting tetrabromobisphenol A and optionally bisphenol A with an excess of diglycidyl ether of bisphenol A. The FR-4 resin is then formulated with solvents and dicyandiamide to produce a laminate. After complete reaction between the FR-4 resin and dicyandiamide, the laminate also exhibits an undesirably low glass transition temperature (usually between 130°C and 150°C).

However, there remains a need for further materials with higher glass transition temperatures. A high glass transition temperature is required because it provides a higher maximum operating temperature for the resultant printed circuit board.

A particularly preferred resin type for applications in which fire retardancy is important is a resin formed from bismaleimide, triazine cyanate ester and epoxy resin (referred to generally as "BT-epoxy resins"). Such materials are disclosed in U.S. Patent No. 4,100,364, U.S. Patent No. 4,456,712, Japanese Patent Application No. 55160021 and Japanese Patent Application No. 58138725.

Although materials with a high glass transition temperature are available, such materials usually show increased brittleness, and therefore reduced toughness. It is desirable to provide a material that not only has a high glass transition temperature, but also has improved toughness, as well as excellent flame retardancy.

## Summary of the Invention

Accordingly, in a first aspect of the present invention, there is provided a curable epoxy resin composition comprising:

(a) at least one oxazolidone-modified epoxy resin which is the reaction product of an epoxy resin and an isocyanate;
(b) at least one maleimide;
(c) at least one cyanate ester; and optionally
(d) at least one non-oxazolidone containing epoxy resin,

wherein at least one component of the composition comprises halogen or phosphorous to provide flame retardancy to the cured composition. In a preferred embodiment, the oxazolidone-modified epoxy resin (a) comprises halogen or phosphorous to provide flame retardancy. In another preferred embodiment, the non-oxazolidone containing epoxy resin (d) comprises halogen or phosphorous to provide flame retardancy. In yet another preferred embodiment, the non-oxazolidone containing epoxy resin (d) comprises halogen or phosphorous to provide flame retardancy and the oxazolidone-modified epoxy resin (a) is free or substantially free of halogen or phosphorous.

In a second aspect of the present invention, there is provided a method of making a curable epoxy resin composition comprising the step of mixing at least one oxazolidone-modified epoxy resin, which is the reaction produce of an epoxy resin and an isocyanate, with at least one maleimide and at least one cyanate ester to form a curable epoxy resin composition, wherein at least one component of the composition comprises halogen or phosphorous to provide flame retardancy to the cured composition. In a preferred embodiment, the oxazolidone-modified epoxy resin (a) comprises halogen or phosphorous to provide flame retardancy. In another preferred embodiment, the non-oxazolidone containing epoxy resin (d) comprises halogen or phosphorous to provide flame retardancy. In yet another preferred embodiment, the non-oxazolidone containing epoxy resin (d) comprises halogen or phosphorous to provide flame retardancy and the oxazolidone-modified epoxy resin (a) is free or substantially free of halogen or phosphorous.

In a third aspect of the present invention, there is provided a method of making a prepreg comprising the step of impregnating a reinforcing web with the above composition to form a prepreg.

In a fourth aspect of the present invention, there is provide a method of making an electrical laminate comprising the steps of heating the above prepreg to a temperature sufficient to partially react the epoxy component of the composition with the maleimide and/or the cyanate ester; laminating one or more layers of the prepreg with an electrically conductive material; and heating the so formed laminate at elevated pressure and elevated temperature to form an electrical laminate.

In a further aspect of the present invention, there is provided the laminate produced by the above method. Preferably, the laminate has an energy of delamination on impact of greater than 3J, and more preferably greater than 5J, according to the test described in the Examples below

In a further aspect of the present invention, there is provided the use of an oxazolidone-modified epoxy resin in an electrical laminate for improving the energy of delamination.

In a further aspect of the present invention, there is provided having a glass transition temperature of at least 170°C when measured by Differential Scanning Calorimetry (DSC). In a yet further aspect of the present invention, there is provided a composition having a flame retardancy of at least V-1 of the UL94 test. Preferably, the compositon of the first aspect of the invention has a glass transition temperature of at least 170°C when measured by Differential Scanning Calorimetry (DSC) and or a flame retardancy of at least V-1 of the UL94 test.

In a further aspect of the present invention, there is provided an electrical laminate having an energy of delamination on impact of greater than 3J, preferably greater than 5J, according to the test described in the Examples below.

## Detailed Description of the Invention

The oxazolidone-modified epoxy resin used in the present invention is formed by the partial reaction of at least one epoxy resin with at least one isocyanate. Oxazolidone groups are also formed from the reaction of an epoxy resin with the cyanate ester. Although the presence of groups formed in this way is favourable, it is essential that at least some of the oxazolidone groups are formed by the reaction between epoxide and isocyanate. The partial reaction of the

epoxy resin with the isocyanate must be undertaken prior to the use of the oxazolidone-modified epoxy resin in the composition of the present invention.

In a preferred embodiment, the composition comprises from about 2% to about 80%, preferably from about 5% to about 70%, more preferably from about 10% to about 60%, even more preferably from about 15% to about 50%, and most preferably from about 20% to about 40% by weight of the at least an oxazolidone-modified epoxy resin, obtained from the reaction between an epoxy resin and an isocyanate.

Except where mentioned otherwise, all percentages are by weight based on the total formulation excluding solvents.

Preferably the oxazolidone-modified epoxy resin is an epoxy-terminated polyoxazolidone having from about 5% to about 30%, preferably from about 5% to about 20%, most preferably from about 10% to about 20% of isocyanate content, and having from about 50% to about 100%, preferably from about 75% to about 100%, most preferably more than about 90% of the original isocyanate groups converted to oxazolidone rings and from about 0% to about 50%, preferably from about 0% to about 25%, most preferably less than about 10% of the original isocyanate groups converted to isocyanurate rings.

Suitably, the composition comprises about 2% to about 40%, preferably from about 5% to about 30%, more preferably from about 10% to about 25% by weight of the at least one maleimide. The maleimide compounds used in accordance with the present invention contain at least one group of the formula

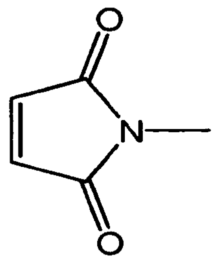

The maleimide is preferably a bismaleimide.

The composition preferably comprises from about 2% to about 60%, preferably from about 5% to about 50%, more preferably from about 10% to about 40%, even more preferably from about 15% to about 35% by weight of the at least one cyanate ester. According to the present invention, a cyanate ester contains at least one group of the formula -OCN. Preferably the cyanate ester contains at least 2 cyanate ester groups per molecule on average. The cyanate ester is preferably partially trimerized to form triazine rings. A triazine ring is described by the formula

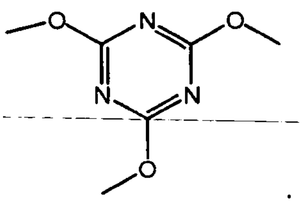

When the cyanate ester is partially trimerized, from about 1 percent to about 70 percent, preferably from about 5 percent to about 60 percent, more preferably from about 20 percent to about 50 percent of the cyanate ester groups are polymerized to form triazines rings. The use of partially trimerized cyanate ester is especially suitable when the functionality of the cyanate ester contains between about 2 and about 3 cyanate ester groups per molecule on average, more particularly when the cyanate ester contains about 2 cyanate ester groups per molecule on average. For example, a partially trimerized cyanate ester of bisphenol A is particularly suitable.

Optionally the maleimide and the cyanate ester resins may be partially reacted together prior to their inclusion in the composition of the present invention as described, for example, in U.S. Patent No. 4,456,712 and U.S. Patent No. 4,110,364, incorporated herein in their entireties by reference.

The composition can comprise additional optional components, such as from about 10000 ppm to about 10 ppm, preferably from about 2000 ppm to about 50 ppm, more preferably from about 1000 ppm to about 100 ppm of at least one reaction catalyst based on the total weight of composition excluding solvent.

Preferably, at least one solvent is present in the composition. When present, the solvent is preferably used in an amount of from about 5% to about 50%, more preferably from about 10% to about 40%, most preferably from about 20% to about 35% based on the total weight of the formulation including solvent.

Optionally from about 1% to about 80%, preferably from about 5% to about 60%, more preferably from about 10% to about 40%, even more preferably from about 15% to about 30% of one or more epoxy resins that are not oxazolidone-modified can be used.

A further optional component is a vinylester, which, when present, is preferably used in an amount of from about 2% to about 40%, preferably from about 5% to about 30%, more preferably from about 10% to about 25% by weight.

A particularly preferred curable epoxy resin composition according to the present invention comprises

(a) from 15 to 50 % by weight of at least one oxazolidone-modified epoxy resin which is the reaction product of an epoxy resin and an isocyanate;
(b) from 5 to 30 % by weight of at least one maleimide;
(c) from 10 to 40 % by weight of at least one cyanate ester;
(d) from 10 to 40 % by weight of at least one non-oxazolidone containing epoxy resin,
(e) at least one catalyst; and
(f) from 10 to 45 % by weight of at least one solvent,

wherein at least one component of the composition comprises halogen or phosphorous to provide flame retardancy to the cured composition. In a preferred embodiment, the oxazolidone-modified epoxy resin (a) comprises halogen or phosphorous to provide flame retardancy. In another preferred embodiment, the non-oxazolidone containing epoxy resin (d) comprises halogen or phosphorous to provide flame retardancy. In yet another preferred embodiment, the non-oxazolidone containing epoxy resin (d) comprises halogen or phosphorous to provide flame retardancy and the oxazolidone-modified epoxy resin (a) is free or substantially free of halogen or phosphorous.

The concentration of flame retardant is such that the composition is able to satisfy at least V-2, preferably at least V-1, more preferably at least V-0 of the UL94 test. Suitable flame retardants are known to the skilled person.

It is conventional in the preparation of epoxy-containing laminates to incorporate various additives in the composition to improve the flame-retardancy of the resulting laminate. Commonly, an additive is used which contains halogen or phosphorous groups. In a preferred embodiment, the oxazolidone-modified epoxy resin (a) comprises halogen or phosphorous to provide flame retardancy. Suitable halogen containing additives include for example tetrabromodiphenylolpropane, or epoxy resins prepared by reacting diglycidyl ether of bisphenol-A with tetrabromodiphenylolpropane.

Preferred halogenated flame retardants are brominated flame retardants. Examples of halogenated flame retardants include halogenated epoxy resins (especially brominated epoxy resins), tetrabromobisphenol A (TBBA) and its derivatives, D.E.R.542, D.E.R.560 which are available from The Dow Chemical Company, a brominated phenol novolac and its glycidyl ether, TBBA epoxy oligomer, and other derivatives. Examples of suitable additional flame retardant additives are given in a paper presented at "Flame retardants 101 Basic Dynamics--Past efforts create future opportunities", Fire Retardants Chemicals Association, Baltimore Marriot Inner Harbour Hotel, Baltimore Md., Mar. 24-27 1996, incorporated herein by reference.

Alternatively, the flame retardant compounds used in the composition of the present invention can be non-halogenated compound. Examples of suitable additional non-halogenated flame retardants are given in U.S. Patent No. 6,645,631 and WO 2005118604 A1, and the related references. Phosphorus based flame retardants are particularly preferred. For example EP-A-0384939, EP-A-0384940, EP-A-0408990, DE-A-4308184, DE-A-4308185, DE-A-4308187, WO-A-96/07685, and WO-A-96/07686 disclose the use of phosphorus flame retardants pre-reacted to form a di or multifunctional epoxy resin. Alternatively, separate phosphorous containing components can be used such as phosphonic acid esters. A particularly preferred phosphorus-containing compound is 9,10-dihydro-9-oxa-10-phosphaphenanthrene-10-oxide (DOP) or its derivatives.

Optionally, at least one halogenated flame retardant and at least one non-halogenated flame retardant can be used in combination.

It is preferred that the flame retardant is incorporated in the reacted resin for example by providing reactive halide or phosphorous containing groups.

Typically, in order to reach the desired fire retardancy level (V-0 in the standard "Underwriters Laboratory" test method UL 94) for a brominated flame retardant, the bromine content is from about 40% to about 5%, preferably from about 30% to about 8%, more preferably from about 25% to about 10%, and even more preferably from about 20% to about 12% based on the total polymer weight in the product. In the case of a phosphorus-containing flame retardant, the phosphorus content is from about 10% to about 0.2%, preferably from about 8% to about 0.5%, more preferably from about 5% to about 1%, and even more preferably from about 4% to about 1.5% based on the total polymer weight in the product.

In preferred embodiments, the flame retardant is present in at least one epoxy resin. The flame retardant can be in either the oxazolidone-modified epoxy resin, a non-oxazolidone modified epoxy resin, or both.

Prepregs can be prepared by impregnating a supporting or reinforcing web with the above epoxy resin composition (or varnish) by known methods such as those described in WO01/42359.

Although the amounts of the epoxy resin varnish composition which are applied to the reinforcing web will vary depending on the specific web and epoxy resin varnish composition employed and the desire properties of the impregnated cloth and electrical laminates prepared therefrom, the epoxy resin varnish composition of the present invention is generally applied to the reinforcing web in conventional amounts. The resin content of the prepreg or laminate is from about 80% to about 20%, preferably from about 70% to about 30%, more preferably from about 65% to about 35%.

The impregnated web or prepreg is subsequently processed using conventional techniques. Such techniques involve advancing and/or curing the epoxy resin by heating the impregnated web to an elevated temperature such as from about 100°C to about 200°C. Subsequently, the prepreg is fabricated into laminates by laminating one or more prepregs, commonly cut to a predetermined size, with thin layers of an electrical conductive material such as copper foil using elevated temperatures and pressures. Conventionally, the laminating temperature vary from about 130°C to about 230°C, with pressures varying from about 34 kPa to about 6.9 MPa.

The glass transition temperature of the fully cured laminate prepared from above formulation is generally higher than 110°C, preferably higher than 150°C, more preferably higher than 170°C, even more preferably higher than 185°C when measured by Differential Scanning Calorimetry (DSC).

All of the various aspects and preferred embodiments of the invention can be used in any desired combination.

Suitable processes for the production of epoxy-terminated polyoxazolidones are disclosed for example in WO90/15089, incorporated herein in its entirety by reference. The process comprises reacting the polyepoxide compound in an epoxy resin with a polyisocyanate compound in the presence of a catalyst for the reaction of the epoxy and isocyanate groups at an elevated temperature.

The polyepoxide compound useful for producing the oxazolidone-substituted epoxy resin is suitably a compound which possesses more than one 1,2-epoxy group. In general, the polyepoxide compound is saturated or unsaturated aliphatic, cycloaliphatic, aromatic or heterocyclic compound which possesses more than one 1,2-epoxy group. The polyepoxide compound can be substituted with one or more substituents which are non-reactive with the isocyanate groups such as lower alkyls and halogens. Such polyepoxide compounds are well known in the art. Illustrative polyepoxide compounds useful in the practice of the present invention are described in the Handbook of Epoxy Resins by H. E. Lee and K. Neville published in 1967 by McGraw-Hill, New York and U.S. Pat. No. 4,066,628.

Particularly useful polyepoxide compounds which can be used for the production of the oxazolidone-substituted epoxy resin are polyepoxides having the general formula

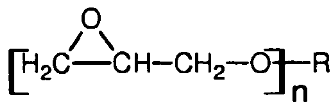

wherein R is substituted or unsubstituted aromatic, aliphatic, cycloaliphatic or heterocyclic polyvalent group and n had an average value of from 1 to less than 8. The preferred diepoxides include diglycidyl ether of 2,2-bis(4-hydroxyphenyl) propane (generally referred to as bisphenol A) and diglycidyl ether of 2,2-bis(3,5-dibromo-4-hydroxyphenyl) propane (generally referred to as tetrabromobisphenol A). Mixtures of any two or more polyepoxides can also be used in the practice of the present invention.

The polyisocyanate compound useful for reacting with the above polyepoxides is represented by the following general formula: $(O=C=N)_m-R'$ wherein R' is substituted or unsubstituted aliphatic, aromatic or heterocyclic polyvalent group and m has an average value of greater than about 1 to less than about 5, preferably from about 1.5 to about 4, most preferably from about 2 to about 3. Examples of suitable polyisocyanates include 4,4'-methylene bis(phenylisocyanate) (MDI) and isomers thereof, higher functional homologues of MDI (commonly designated as "polymeric MDI"), toluene diisocyanate (TDI) such as 2,4-toluene diisocyanate and 2,6-toluene diisocyanate, m-xylylene diisocyanate, hexamethylene diisocyanate (HMDI) and isophoronediisocyanate. Mixtures of any two or more polyisocyanates can also be used in the practice of the present invention. Other suitable polyisocyanate compounds are described in U.S. Pat. Nos. 3,313,747; 4,066,628 and 4,742,146.

Preferred polyisocyanate compounds are 4,4'-methylene bis(phenylisocyanate) (MDI) and isomers thereof, polymeric MDI and toluene diisocyanate (TDI). The most preferred polyisocyanate compounds are 4,4'-methylene bis (phenylisocyanate), isomers thereof and polymeric MDI.

The maleimide compounds used in accordance with the present invention contain at least one group of the formula

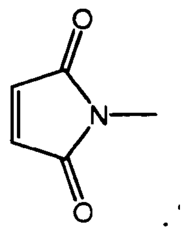

The maleimides may be prepared by the reaction of an unsaturated anhydride with the primary amino groups of an amine. The maleimide compound of the present invention preferably has at least two maleimide groups. Suitable maleimide compounds include e.g., 1-methyl-2,4-bismaleimidobenzene, N,N'-m-phenylenebismaleimide, N,N'-p-phenylenebismaleimide, N,N'-m-toluylenebismaleimide, N,N'-4,4-biphenylenebismaleimide, N,N'-4,4-(3,3'-dimethyl-biphenylene)bismaleimide, N,N'-4,4-(3,3'-dimethyldiphenylmethane)bismaleimide, N,N'-4,4-(3,3'-diethyldiphenylmethane) bismaleimide, N,N'-4,4-diphenylmethanebismaleimide, N,N'-4,4-diphenylpropanebismaleimide, N,N'-3,3'-diphenylsulfonebismaleimide, N,N'-4,4-diphenyl ether bismaleimide, 2,2-bis{4-(4-maleimidophenoxy)phenyl}propane, 2,2-bis{3-s-butyl-4,8-(4-maleimidophenoxy)phenyl}propane, 1,1-bis{4-(4-maleimidophenoxy)phenyl}decane, 4,4'-cyclohexylidene-bis{1-(4-maleimidophenoxy)phenyl}-2-cyclohexylbenzene, 2,2-bis{4-(4-maleimidophenoxy)phenyl}hexafluoropropane and the like. However, it is possible to use maleimide compounds with only one maleimide group. Other maleimides which are suitable will be known to the person skilled in the art and include those disclosed in, for example, U.S. Patent No. 5,189,116 and WO8700835.

According to the present invention, a cyanate ester contains at least one group of the formula -OCN. Preferably the cyanate ester contains at least 2 cyanate ester groups per molecule on average. The cyanate ester is preferably partially trimerized to form triazine rings. A triazine ring is described by the formula

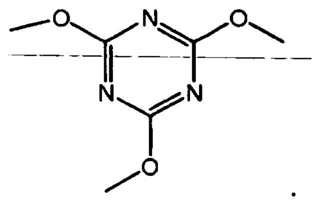

Other cyanate esters and triazines which are suitable will be known to the person skilled in the art and include those disclosed in, for example, U.S. Patent No. 5,886,134 and EP 298742.

The additional non-oxazolidone containing epoxy resins optionally used in the curable epoxy resin composition are preferably polyepoxide compounds which are saturated or unsaturated aliphatic, cycloaliphatic, aromatic or heterocyclic compound which possesses more than one 1,2-epoxy group. The polyepoxide compound can be substituted with one or more substituents such as lower alkyls and halogens. Such polyepoxide compounds are well known in the art.

Illustrative polyepoxide compounds useful in the practice of the present invention are described in the Handbook of Epoxy Resins by H. E. Lee and K. Neville published in 1967 by McGraw-Hill, New York and U. S. Patent No. 4,066, 628.

Particularly useful polyepoxide compounds which can be used in the practice of the present invention are polyepoxides having the following general formula:

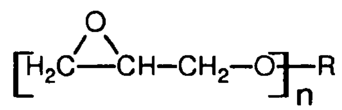

wherein R is substituted or unsubstituted aromatic, aliphatic, alicyclic, cycloaliphatic or heterocyclic polyvalent group and n had an average value of from 1 to less than 8.

Examples of epoxy resins that may be used include for example, the glycidyl ethers of resorcinol, catechol, hydroquinone, bisphenol, bisphenol A, bisphenol AP (1,1-bis(4-hydroxylphenyl)-1-phenyl ethane), bisphenol F, bisphenol K, tetrabromobisphenol A, phenol-formaldehyde novolac resins, bisphenol A-formaldehyde novolac resins, bisphenol F-formaldehyde novolac resins, alkyl substituted phenol-formaldehyde resins, phenolhydroxybenzaldehyde resins, cresol-hydroxybenzaldehyde resins, dicyclopentadiene-phenol resins, dicyclopentadiene-substituted phenol resins tetramethylbisphenol, tetramethyl-tetrabromobisphenol, tetramethyltribromobisphenol, tetrachlorobisphenol A and any combination thereof.

Examples of diepoxides which are particularly useful include diglycidyl ether of 2,2-bis (4-hydroxyphenyl) propane (generally referred to as bisphenol A) and diglycidyl ether of 2,2-bis (3,5-dibromo-4-hydroxyphenyl) propane (generally referred to as tetrabromobisphenol A).

Mixtures of any two or more non-oxazolidone containing polyepoxides can also be used. Other useful epoxide compounds which can be used are cycloaliphatic epoxides. A cycloaliphatic epoxide consists of a saturated carbon ring having an epoxy oxygen bonded to two vicinal atoms in the carbon ring for example as illustrated by the following general formula:

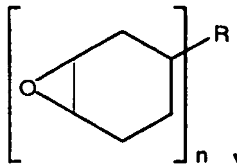

wherein R is as defined above and n is as defined above.

The cycloaliphatic epoxide may be a monoepoxide, a diepoxide, a polyepoxide, or a mixture of those. For example, any of the cycloaliphatic epoxide described in U. S. Patent No. 3,686, 359 can be used.

The organic solvents suitably employed for the compositions of the present invention are those organic liquids in which the epoxy-terminated polyoxazolidone are soluble and which are sufficiently volatile such that they escape from the varnish composition before and/or during the partial cure and/or before the final cure. Illustrative examples of such organic liquids are various glycol ethers such as ethylene or propylene glycol monomethylether and the esters thereof such as ethylene glycol monomethylether acetate; ketones such as methylisobutyl ketone, methylethyl ketone, acetone and methylisopropyl ketone; and aromatic hydrocarbons such as toluene and xylene or mixtures thereof. Of such organic liquids, those preferably used as the solvent in the epoxy resin composition of the present invention are the ketones, particularly acetone, methyl ethyl ketone and methyl isobutyl ketone, or mixtures of these ketones with each other or with one or more of the other solvents. Other solvents that can be used are dimethyl sulfoxide (DMSO), N-methylpyrrolidone and dimethylformamide.

The amount of solvent most advantageously employed in the varnish of the present invention will vary depending on a variety of factors including the particular solvent, hardener and epoxy resin employed, desired properties of the epoxy resin composition (for example, desired viscosity of the varnish composition and the desired resin "pick-up" of this composition by the reinforcing web). Advantageously, the composition exhibits a viscosity from about 50 to about 1000 milliPascal seconds (mPa.s) measured using a Brookfield viscometer, Type RVT, 20 rpm and the appropriate spindle at 25°C. In general, the amount of solvent will range from about 5 to about 50, preferably from about 10 to about 45, more preferably from about 15 to about 40 weight percent, based on the total weight of the varnish composition, the remainder comprising non-volatiles components (amount of the total solids other than the solvents). More preferably, the epoxy composition will contain from about 20 to about 40 weight percent of the solvent and from about 60 to about 80 weight percent non-volatiles.

The composition of the present invention preferably comprises at least one catalyst capable of promoting the curing of the different resins and promoting the reaction between the resins. Examples of suitable catalyst materials include metal catalysts such as zinc carboxylates, organozinc chelate compounds, and trialkyl aluminium, quarternary phosphonium and ammonium salts, tertiary amines and imidazole compounds. Preferably, the catalysts include a metal catalyst which contains one or more metals selected from the group consisting of chromium, manganese, iron, cobalt, nickel, copper, niobium, molybdenum, ruthenium, rhodium, palladium, tantalum, iridium, and platinum. Examples of suitable catalysts for the epoxy reaction are given in U.S. Patent No. 6,127,538. The catalyst of the present invention may be selected, for example, from the group consisting of amines, amides, substituted imidazoles, and non-substituted imidazoles, and the like, and combinations thereof. Examples of suitable catalyst compounds also include those compounds listed in European Patent Specification EP0954553, incorporated herein by reference. Other catalysts useful in the present invention are phosphorus-containing compounds including, for example, triphenyl phosphine and phosphonium acid derivatives, and the like, and mixtures thereof. Particularly preferred catalysts are zinc-bis(2-ethylhexanoate) and copper acetylacetonate.

In addition, the compositions of the present invention may optionally comprise at least one vinyl ester.

The epoxy vinyl esters suitable for the practice of the present invention are generally prepared by the adduction of an at least difunctional epoxide with at least two molecules of an unsaturated monocarboxylic acid in which the carbon-to-carbon double bond is vinyl reactive. The epoxy vinyl ester is prepared by reacting the polyepoxide and the acid in about stoichiometric amounts, generally with heating and in the presence of a catalyst, such as a trivalent chromium salt, for example $CrCl_3$, a phosphine, an onium salt, or a tertiary amine, for example, tris(N,N-dimethylaminomethyl phenol). Optionally, the epoxy vinyl ester resin can be formed in the presence of a non-resinous, vinyl monomer such

as styrene and the resulting mixture constitutes what is meant by the term epoxy vinyl ester resin. Suitable non-resinous, vinyl monomers include, for example, styrene, alpha-methylstyrene, methylstyrene, divinylbenzene and acrylonitrile and others disclosed in U. S. Patent No. 4,824,919. A substantial number of different epoxy vinyl ester resins having distinct characteristics may be prepared by reacting different epoxides (or mixtures thereof) with various unsaturated acids (or mixtures thereof). Similarly, the properties of the epoxy vinyl ester resin/non-resinous vinyl monomer mixture may be varied by selecting various such monomers (or mixtures thereof). Examples of suitable vinyl esters are given in EP 927213 and WO9810004.

Optionally, the curable composition of the present invention may further contain other components typically used in thermosetting resin composition particularly for making prepregs and laminates; and which do not detrimentally affect the properties or performance of the composition of the present invention, or the final cured product therefrom. For example, other optional components useful in the composition may include toughening agents, curing inhibitors, fillers, wetting agents, colorants, flame retardants, solvents, thermoplastics, processing aids, fluorescent compounds, such as tetraphenolethane (TPE) or derivatives thereof, UV blocking compounds, and other additives. The compositions of the present invention may also include other optional constituents such as inorganic fillers and additional flame retardants, for example antimony oxide, octabromodiphenyl oxide, decabromodiphenyl oxide, phosphoric acid and other such constituents as is known in the art including, but not limited to, dyes, pigments, surfactants, flow control agents, plasticizers, and the like.

In one embodiment, the composition may optionally contain a toughening agent that creates phase separated micro-domains. Preferably, the toughening agent creates phase separated domains or particles, which average size is lower than about 5 micron, preferably lower than about 2 micron, more preferably lower than about 500 nm, and even more preferably lower than about 100 nm. Preferably, the toughening agent is a block copolymer toughening agent, more preferably the toughening agent is a triblock toughening agent, or the toughening agent consists of pre-formed particles, preferably core-shell particles. In particular, the triblock copolymer could have polystyrene, polybutadiene, and poly(methyl methacrylate) segments or poly(methyl methacrylate) and poly(butyl acrylate) segments. Preferably, the toughening agent does not substantially reduce Tg of the cured system, i.e. the reduction of Tg is less than 15°C, preferably less than 10°C, and more preferably less than 5°C. When present, the concentration of toughening agent is between about 0.1 and about 30 phr, preferably between about 0.5 and about 20 phr, more preferably between about 1 and about 10 phr, and even more preferably between about 2 and about 8 phr.

In another embodiment, the epoxy resin composition may optionally contain a fluorescent and a UV blocking compound, such as tetraphenolethane. Preferably, the fluorescent compound is tetraphenol ethane (TPE) or derivatives. Preferably, the UV blocking compound is TPE or derivatives.

In another embodiment, the composition of the present invention may contain a cure inhibitor, such as boric acid. In one embodiment, the amount of boric acid is preferably from about 0.01 to about 3% by weight to the epoxy resin (a) (based on solids), more preferably from about 0.1 to about 2% by weight, and more preferably from about 0.2 to about 1.5% by weight. In this embodiment, it is particularly useful to maintain the presence of a portion of imidazole catalyst since boric acid forms complexes with imidazoles which act as a latent catalyst for the composition.

The compositions of the present invention are particularly useful in impregnating weaves, webs, fabric and cloth of variety of different materials including glass, quartz and synthetic fibers such as aramid. In the preparation of electrical laminates, a glass web is conventionally employed.

Preferred embodiments of the present invention will now be further described with reference to the following Examples.

## Examples

The following Examples are set forth to illustrate various embodiments of the present invention; and are not intended to limit the scope of the present invention. Unless otherwise stated all parts and percentages in the Examples are by weight.

Various terms, abbreviations and designations for the raw materials used in the following Examples are explained as follows:

EEW stands for epoxy equivalent weight (on solids).
% Br stands for bromine content (by weight, on solids).
% P stands for phosphorus content (by weight, on solids).
Epoxy Resin F is a polymer of bisphenol A, tetrabromobisphenol A, and epichlorohydrin.
It is a conventional brominated FR-4 epoxy resin, EEW = 450, %Br = 20%.
Epoxy Resin H is a polymer of tetrabromobisphenol A and epichlorohydrin. It is a high bromine content epoxy resin, EEW = 450, %Br = 49%.
Epoxy Resin O is a polymer of methylene diphenylene isocyanate, diglycidyl ether of bisphenol A, and diglycidyl

ether of tetrabromobisphenol A. It is a brominated oxazolidone-modified epoxy resin and brominated epoxy resins, EEW = 360, %Br = 17%. Epoxy Resin D is a conventional diglycidyl ether of bisphenol A, EEW = 180.

Epoxy Resin M is a polymer of methylene diphenylene isocyanate and diglycidyl ether of bisphenol A. It is a non-brominated oxazolidone-modified epoxy resin, EEW = 400.

Epoxy Resin P is a phosphorus-modified multifunctional polymeric epoxy resin. It is a halogen-free FR-4 epoxy resin, EEW = 325, % P = 3.0%.

Resin B is diphenylmethane-4,4'-bismaleimide.

Resin T is a triazine homopolymer of 2,2-bis(4-cyanatophenyl)propane

Catalyst is zinc-bis(2-ethylhexanoate).

MEK is methyl ethyl ketone.

DMF is N,N-dimethylformamide.

The glass reinforcement used in the Examples is a woven 7628-type E-glass.

The copper foil used in the Examples is a standard 35 micron (1 oz) grade.

he varnish formulations according to the present invention were prepared by dissolving the individual resins and catalyst components in suitable solvents at ambient temperature and mixing the solutions in accordance with the amounts set out in Table 1 below. The amounts of each epoxy resin component were chosen such that the Bromine content was identical in each composition. Prepregs were prepared by coating the varnish on style 7628 glass cloth and drying in a horizontal laboratory treater oven at 178° C for about 3 minutes to evaporate the solvents and advance the reacting mixture to a non- tacky B-stage. Laminates were prepared using 8 prepreg plies sandwiched between sheets of copper foil and pressing at 200°C for 90 minutes. The pressure applied to the laminate allows the amount of resin remaining on the laminate. In this case, the pressure was adjusted to provide a laminate resin content equal to about 43%.

Example 1 and Comparative Example A

Table 1

| Varnish Composition Raw materials | Comparative Example A | Example 1 |
|---|---|---|
| Epoxy Resin F [80% non volatiles in MEK] | 176.9 | 0.0 |
| Epoxy Resin H [70% non volatiles in DMF] | 77.0 | 99.6 |
| Epoxy Resin O [80% non volatiles in acetone] | 0.0 | 126.0 |
| Resin T [75% non volatiles in MEK] | 100.0 | 100.0 |
| Resin B [50% non volatiles in MEK] | 100.0 | 100.0 |
| Catalyst [10% non volatiles in MEK] | 0.5 | 0.6 |
| MEK | 33.4 | 33.3 |

Table 2

| Varnish Properties | Comparative Example A | Example 1 |
|---|---|---|
| Varnish gel time | 290 | 270 |
| %Br (on non volatiles) | 17% | 17% |
| % non volatiles | 65.7% | 64.3% |

Table 3

| Test Results | Comparative Example A | Example 1 |
|---|---|---|
| Colour | Homogenous dark brown | Homogenous dark brown |
| Tg (DSC, mid point, 20°C/min), °C | 190 | 205 |

(continued)

| Test Results | Comparative Example A | Example 1 |
|---|---|---|
| Tt (DMTA, peak tanδ, 1 Hz), °C | 212 | 227 |
| Tg (TMA, 10°C/min), °C | 178 | 195 |
| T288 (TMA), min | 10 | 10 |
| Average CTE 50 - 288 °C (TMA), ppm/K | 150 | 105 |
| UL 94, rating / sum of individual burning times | V-0, 11 s | V-0, 2 s |
| Water uptake (High Pressure Cooker, 2h, 121 °C), wt% | 0.26 | 0.24 |
| High Pressure Cooker 2h + 2 min dip @288 °C, %pass visual | 100% pass | 100% pass |
| Copper Peel Strength, 35μm standard copper, N/cm | 13 | 13 |
| Dk / Df measured at 1 MHz | 4.05 / 0.004 | 3.90 / 0.004 |
| Dk / Df measured at 10MHz | 4.00 / 0.006 | 3.90/0.006 |
| Dk / Df measured at 100MHz | 3.95 / 0.006 | 3.85 / 0.006 |
| Dk / Df measured at 500MHz | 3.90 / 0.006 | 3.80 / 0.006 |
| Dk / Df measured at 1GHz | 3.95 / 0.005 | 3.80 / 0.005 |
| Energy of delamination on impact, J | 2.7 | 6.2 |

It can be seen that the Example of the present invention not only has a significantly higher glass transition temperature, but also an increase in energy of delamination and a decrease in Dk. The increase in glass transition temperature allows use of the laminate at higher operating temperatures. The increase in energy of delamination demonstrates that the resultant laminate is also tougher than the comparative example, and the reduction in dielectric constant is useful for high end printed circuit boards to ensure higher signal speed.

The results in Table 3 were obtained using the following test methods:

Table 4

| Property Measured | IPC Test Method |
|---|---|
| Gel time, prepreg materials [prepreg gel time] Note: Similar method was used to determine varnish stroke cure gel time | IPC-TM-650-2.3.18A |
| Glass transition temperature and cure factor by DSC [Tg] Note: Tg was determined on laminates with a heating ramp of 20°C/min | IPC-TM-650-2.4.25C |
| Glass Transition and Modulus of Materials Used in High Density Interconnection (HDI) and Microvias - DMA Method [Tt] Note: Tt was reported as the transition peak temperature in the tanδ plot. The heating ramp consisted in 3°C increase steps followed by 20s dwell time. | IPC-TM-650-2.4.24.4, method |
| Glass transition temperature and z-axis Thermal expansion by Thermal Mechanical Analysis (TMA) [Coefficient of Thermal Expansion (CTE)] | IPC-TM-650-2.4.24C |
| Time to delamination (TMA Method) [T288] Note: T288 was measured at 288°C | IPC-TM-650-2.4.24.1 |
| Thermal decomposition temperature [Td] by Thermo-Gravimetry Analysis (TGA) Note: Td was determined at 5% weight loss under nitrogen with a heating ramp of 10°C/min | IPC-TM-650-2.4.24.6 |
| Flammability of laminate [UL94] | IPC-TM-650-2.3.10B |
| Pressure vessel method for glass epoxy laminate integrity [high pressure cooker test (HPCT)] Note: Laminates coupons were conditioned in the pressure vessel in a moisture-saturated atmosphere at 121°C for 2h | IPC-TM-650-2.6.16 |
| Peel strength of metallic clad laminates [copper peel strength (CPS)] | IPC-TM-650-2.4.8C |
| Permittivity and loss tangent from 1 MHz to 1 GHZ with parallel plates at 25°C [Dk / Df] | IPC-TM-650-2.5.5.9 |

The energy of delamination on impact is the energy required to reach delamination of the laminate on an impact. The equipment used in this test is a Byk Chemie impact tester model N°5510. The indentor used is a steel punch (4 1b) with a hemispherical head (diameter = 5/8 inches). By gradually increasing the distance the weight drops, the height at which delamination occurs is determined (noted as Hd). The energy of delamination on impact (noted as Ed) is then calculated as follows:

$$Ed = mass \times distance \times acceleration$$

$$Ed = 0.1781 \times Hd,$$

where Hd is measured in cm and Ed in joule.

The higher the value of Ed, the better the toughness of the laminate and the higher the interlayer adhesion. This is also a measure of brittleness. The higher the value of Ed, the lower the brittleness.

Example 2 and Comparative Example B

Table 5

| Varnish Composition Raw materials | Comparative Example B | Example 2 |
|---|---|---|
| Epoxy Resin D [100% non volatiles] | 28.0 | 0.0 |
| Epoxy Resin M [100% non volatiles] | 0.0 | 28.0 |
| Epoxy Resin P [75% non volatiles in MEK] | 74.7 | 74.7 |
| Resin T [75% non volatiles in MEK] | 44.8 | 44.8 |
| Resin B [50% non volatiles in MEK] | 44.8 | 44.8 |
| Catalyst [10% non volatiles in MEK] | 0.35 | 0.35 |
| MEK | 13.3 | 13.3 |

Table 6

| Varnish Properties | Comparative Example B | Example 2 |
|---|---|---|
| Varnish gel time | 325 | 330 |
| % P (on non volatiles) | 1.2 | 1.2 |
| % non volatiles | 68.0 | 68.0 |

Table 7

| Test Results | Comparative Example B | Example 2 |
|---|---|---|
| Colour | Homogeneous dark brown | Homogeneous dark brown |
| Tg (DSC, mid point, 10°C/min), °C | 150 | 175 |
| Td (TGA, 5% weight loss, 10°C/min), °C | 354 | 360 |
| Energy of delamination on impact, J | 1.8 | 6.2 |

It can be seen that the Example of the present invention not only has a significantly higher glass transition temperature, but also an increase in energy of delamination and a marginal improvement in thermal decomposition temperature. The increase in glass transition temperature allows use of the laminate at higher operating temperatures.

The increase in energy of delamination demonstrates that the resultant laminate is also tougher than the comparative example.

Example 3

Table 8

| Varnish Composition Raw materials | Example 3 |
|---|---|
| Epoxy Resin H [70% non volatiles in DMF] | 55.0 |
| Epoxy Resin O [80% non volatiles in acetone] | 167.6 |
| Resin T [75% non volatiles in MEK] | 100.0 |
| Resin B [50% non volatiles in MEK] | 100.0 |
| Catalyst [10% non volatiles in MEK] | 0.6 |

Table 9

| Varnish Properties | Example 3 |
|---|---|
| Varnish gel time | 305 |
| % Br (on non volatiles) | 14 |
| % non volatiles | 70.3 |

Table 10

| Test Results | Example 3 |
|---|---|
| Colour | Homogenous dark brown |
| Tg (DSC, mid point, 20°C/min), °C | 205 |
| UL 94, rating / sum of individual burning times | V-0, 7 s |
| Water uptake (High Pressure Cooker, 2h, | 0.22 |
| 121 °C), wt% | |
| High Pressure Cooker 2h + 2 min dip @288°C, %pass visual | 100% pass |
| Copper Peel Strength, 35μm standard copper, N/cm | 15 |
| Energy of delamination on impact, J | 7.1 |

It can be seen that the higher concentration of oxazolidone-modified epoxy resin used in Example 3 leads to higher energy of delamination and higher copper peel strength when compared to Example 1.

It can also be seen that Example 3 of the present invention not only has a significantly higher glass transition temperature and energy of delamination when compared to Comparative Example A, but also requires lower concentration of bromine flame retardant to achieve similar (marginally better) flame retardancy.

## Claims

**1.** A curable epoxy resin composition comprising:

(a) at least one oxazolidone-modified epoxy resin which is the reaction product of an epoxy resin and an isocyanate;
(b) at least one maleimide;

(c) at least one cyanate ester; and optionally
(d) at least one non-oxazolidone containing epoxy resin,

wherein at least one component of the composition comprises halogen or phosphorous to provide flame retardancy to the cured composition.

**2.** A composition as claimed in Claim 1 additionally comprising a component selected from the group consisting of a catalyst, a solvent, a vinyl ester, and combinations thereof.

**3.** A composition as claimed in any one of the preceding claims, wherein the oxazolidone-modified epoxy resin is present in an amount of from 15 to 50 % by weight of the composition.

**4.** A composition as claimed in any one of the preceding claims, wherein the cyanate ester is present in an amount of from 10 to 40 % by weight of the composition.

**5.** A composition as claimed in any one of the preceding claims, wherein the cyanate ester comprises triazine rings.

**6.** A composition as claimed in any one of the preceding claims, wherein the maleimide is a bismaleimide and is present in an amount of from 5 to 30 % by weight of the composition.

**7.** A composition as claimed in Claim 3, wherein the solvent is present in an amount of from 10 to 40 % by weight.

**8.** A composition as claimed in any one of the preceding claims, wherein the non-oxazolidone containing epoxy resin is present in an amount of from 10 to 40 % by weight.

**9.** A composition as claimed in Claim 2, wherein the vinyl ester is present in an amount of from 5 to 30 % by weight.

**10.** A curable epoxy resin composition as claimed in Claim 1 comprising:

(a) from 15 to 50 % by weight of at least one oxazolidone-modified epoxy resin which is the reaction product of an epoxy resin and an isocyanate;
(b) from 5 to 30 % by weight of at least one maleimide;
(c) from 10 to 40 % by weight of at least one cyanate ester;
(d) from 10 to 40 % by weight of at least one non-oxazolidone containing epoxy resin,
(e) at least one catalyst; and
(f) from 10 to 45 % by weight of at least one solvent,

wherein at least one component of the composition comprises halogen or phosphorous to provide flame retardancy to the cured composition.

**11.** A composition as claimed in any one of the preceding claims, wherein the composition has a glass transition temperature of at least 170°C when measured by Differential Scanning Calorimetry (DSC) using IPC-TM-650-2.4.25C.

**12.** A composition as claimed in any one of the preceding claims, wherein the composition has a flame retardancy of at least V-1 of the UL94 test using IPC-TM-650-2.3.10B.

**13.** An electrical laminate comprising the composition of any one of claims 1 to 12, wherein the laminate has an energy of delamination on impact of greater than 3J measured using a Byk Chemie impact tester model No. 5510.

**14.** An electrical laminate comprising the composition of any one of claims 1 to 12, wherein the laminate has an energy of delamination on impact of greater than 5J, measured using a Byk chemic impact tester model No. 5510

**15.** A method of making a curable epoxy resin composition comprising the step of:

mixing at least one oxazolidone-modified epoxy resin, which is the reaction product of an epoxy resin and an isocyanate, with at least one maleimide and at least one cyanate ester and optionally one non-oxazolidone containing epoxy resin to form a curable epoxy resin composition,

wherein at least one component of the composition comprises halogen or phosphorous to provide flame retardancy to the cured composition.

**16.** The composition of any one of the claims 1 to 12, wherein the oxazolidone-modified epoxy resin comprises halogen or phosphorous to provide flame retardancy.

**17.** The composition of any one of the claims 1 to 12, wherein the non-oxazolidone containing epoxy resin comprises halogen or phosphorus to provide flame retardancy.

**18.** The composition of claim 17, wherein the oxazolidone-modified epoxy resin is substantially free of halogen or phosphorous.

**Patentansprüche**

**1.** Härtbare Epoxidharzzusammensetzung, die Folgendes umfasst:

(a) mindestens ein oxazolidonmodifiziertes Epoxidharz, bei dem es sich um das Reaktionsprodukt eines Epoxidharzes und eines Isocyanats handelt;
(b) mindestens ein Maleimid;
(c) mindestens einen Cyanatester; und optional
(d) mindestens ein nicht oxazolidonhaltiges Epoxidharz,

wobei mindestens eine Komponente der Zusammensetzung Halogen oder Phosphor umfasst, um der gehärteten Zusammensetzung Flammwidrigkeit zu verleihen.

**2.** Zusammensetzung nach Anspruch 1, die zusätzlich eine Komponente umfasst, die aus der aus einem Katalysator, einem Lösungsmittel, einem Vinylester und Kombinationen davon bestehenden Gruppe ausgewählt ist.

**3.** Zusammensetzung nach einem der vorhergehenden Ansprüche, wobei das oxazolidonmodifizierte Epoxidharz in einer Menge von 15 bis 50 Gew.-% der Zusammensetzung vorliegt.

**4.** Zusammensetzung nach einem der vorhergehenden Ansprüche, wobei der Cyanatester in einer Menge von 10 bis 40 Gew.-% der Zusammensetzung vorliegt.

**5.** Zusammensetzung nach einem der vorhergehenden Ansprüche, wobei der Cyanatester Triazinringe umfasst.

**6.** Zusammensetzung nach einem der vorhergehenden Ansprüche, wobei das Maleimid ein Bismaleimid ist und in einer Menge von 5 bis 30 Gew.-% der Zusammensetzung vorliegt.

**7.** Zusammensetzung nach Anspruch 3, wobei das Lösungsmittel in einer Menge von 10 bis 40 Gew.-% vorliegt.

**8.** Zusammensetzung nach einem der vorhergehenden Ansprüche, wobei das nicht oxazolidonhaltige Epoxidharz in einer Menge von 10 bis 40 Gew.-% vorliegt.

**9.** Zusammensetzung nach Anspruch 2, wobei der Vinylester in einer Menge von 5 bis 30 Gew.-% vorliegt.

**10.** Härtbare Epoxidharzzusammensetzung nach Anspruch 1, die Folgendes umfasst:

(a) von 15 bis 50 Gew.-% mindestens eines oxazolidonmodifizierten Epoxidharzes, bei dem es sich um das Reaktionsprodukt eines Epoxidharzes und eines Isocyanats handelt;
(b) von 5 bis 30 Gew.-% mindestens eines Maleimids;
(c) von 10 bis 40 Gew.-% mindestens eines Cyanatesters;
(d) von 10 bis 40 Gew.-% mindestens eines nicht oxazolidonhaltigen Epoxidharzes;
(e) mindestens einen Katalysator; und
(f) von 10 bis 45 Gew.-% mindestens eines Lösungsmittels,

wobei mindestens eine Komponente der Zusammensetzung Halogen oder Phosphor umfasst, um der gehärteten

Zusammensetzung Flammwidrigkeit zu verleihen.

**11.** Zusammensetzung nach einem der vorhergehenden Ansprüche, wobei die Zusammensetzung eine Glasübergangstemperatur von mindestens 170°C hat, gemessen durch Differentialscanningkalorimetrie (DSC) unter Verwendung von IPC-TM-650-2.4.25C.

**12.** Zusammensetzung nach einem der vorhergehenden Ansprüche, wobei die Zusammensetzung bei dem UL94-Test unter Verwendung von IPC-TM-650-2.3.10B eine Flammwidrigkeit von mindestens V-1 hat.

**13.** Elektrisches Laminat, das die Zusammensetzung nach einem der Ansprüche 1 bis 12 umfasst, wobei das Laminat bei einem Schlag eine Delaminierungsenergie größer als 3J hat, gemessen mit einem Schlagprüfgerät, Modell Nr. 5510, von Byk Chemie.

**14.** Elektrisches Laminat, das die Zusammensetzung nach einem der Ansprüche 1 bis 12 umfasst, wobei das Laminat bei einem Schlag eine Delaminierungsenergie größer als 5J hat, gemessen mit einem Schlagprüfgerät, Modell Nr. 5510, von Byk Chemie.

**15.** Verfahren zur Herstellung einer härtbaren Epoxidharzzusammensetzung, mit dem folgenden Schritt:

Mischen mindestens eines oxazolidonmodifizierten Epoxidharzes, bei dem es sich um das Reaktionsprodukt eines Epoxidharzes und eines Isocyanats handelt, mit mindestens einem Maleimid und mindestens einem Cyanatester und optional einem nicht oxazolidonhaltigen Epoxidharz, um eine härtbare Epoxidharzzusammensetzung zu bilden,
wobei mindestens eine Komponente der Zusammensetzung Halogen oder Phosphor umfasst, um der gehärteten Zusammensetzung Flammwidrigkeit zu verleihen.

**16.** Zusammensetzung nach einem der Ansprüche 1 bis 12, wobei das oxazolidonmodifizierte Epoxidharz Halogen oder Phosphor umfasst, um Flammwidrigkeit zu verleihen.

**17.** Zusammensetzung nach einem der Ansprüche 1 bis 12, wobei das nicht oxazolidonhaltige Epoxidharz Halogen oder Phosphor umfasst, um Flammwidrigkeit zu verleihen.

**18.** Zusammensetzung nach Anspruch 17, wobei das oxazolidonmodifizierte Epoxidharz im Wesentlichen frei ist von Halogen oder Phosphor.

## Revendications

**1.** Composition de résine époxy durcissable, comprenant :

a) au moins une résine époxy modifiée à groupes oxazolidinone, qui est le produit de réaction d'une résine époxy et d'un isocyanate ;
b) au moins un maléimide ;
c) et au moins une résine cyanate ester,
ainsi que, en option,
d) au moins une résine époxy sans groupes oxazolidinone,

dans laquelle composition il y a au moins un composant qui contient un halogène ou du phosphore, ce qui fait que la composition durcie sera ignifugée.

**2.** Composition conforme à la revendication 1, qui comprend en outre un composant choisi dans l'ensemble formé par un catalyseur, un solvant, une résine vinylester et une combinaison de ceux-ci.

**3.** Composition conforme à l'une des revendications précédentes, dans laquelle la résine époxy modifiée à groupes oxazolidinone se trouve présente en une quantité représentant de 15 à 50 % du poids de la composition.

**4.** Composition conforme à l'une des revendications précédentes, dans laquelle la résine cyanate ester se trouve présente en une quantité représentant de 10 à 40 % du poids de la composition.

5. Composition conforme à l'une des revendications précédentes, dans laquelle la résine cyanate ester comprend des cycles triazine.

6. Composition conforme à l'une des revendications précédentes, dans laquelle le maléimide est un bis-maléimide et se trouve présent en une quantité représentant de 5 à 30 % du poids de la composition.

7. Composition conforme à la revendication 3, dans laquelle le solvant se trouve présent en une proportion de 10 à 40 % en poids.

8. Composition conforme à l'une des revendications précédentes, dans laquelle la résine époxy sans groupes oxazolidinone se trouve présente en une proportion de 10 à 40 % en poids.

9. Composition conforme à la revendication 2, dans laquelle la résine vinylester se trouve présente en une proportion de 5 à 30 % en poids.

10. Composition de résine époxy durcissable, conforme à la revendication 1, comprenant :

a) de 15 à 50 % en poids d'au moins une résine époxy modifiée à groupes oxazolidinone, qui est le produit de réaction d'une résine époxy et d'un isocyanate ;
b) de 5 à 30 % en poids d'au moins un maléimide ;
c) de 10 à 40 % en poids d'au moins une résine cyanate ester,
d) de 10 à 40 % en poids d'au moins une résine époxy sans groupes oxazolidinone,
e) au moins un catalyseur,
f) et de 10 à 45 % en poids d'au moins un solvant,

dans laquelle composition il y a au moins un composant qui contient un halogène ou du phosphore, ce qui fait que la composition durcie sera ignifugée.

11. Composition conforme à l'une des revendications précédentes, laquelle composition présente une température de transition vitreuse, mesurée par analyse enthalpique différentielle (AED ou DSC) selon le protocole IPC-TM-650-2.4.25C, d'au moins 170 °C.

12. Composition conforme à l'une des revendications précédentes, laquelle composition présente, dans le test UL94 réalisé selon le protocole IPC-TM-650-2.3.10B, une résistance à l'inflammation notée au moins V-1.

13. Stratifié pour applications électriques, comprenant une composition conforme à l'une des revendications 1 à 12, lequel stratifié présente une énergie de déstratification suite à un choc, mesurée au moyen d'un appareil à essais de chocs Byk Chemie, modèle n° 5510, supérieure à 3 J.

14. Stratifié pour applications électriques, comprenant une composition conforme à l'une des revendications 1 à 12, lequel stratifié présente une énergie de déstratification suite à un choc, mesurée au moyen d'un appareil à essais de chocs Byk Chemie, modèle n° 5510, supérieure à 5 J.

15. Procédé de préparation d'une composition de résine époxy durcissable, lequel procédé comporte l'étape suivante :

mélanger au moins une résine époxy modifiée à groupes oxazolidinone, qui est le produit de réaction d'une résine époxy et d'un isocyanate, avec au moins un maléimide et au moins une résine cyanate ester, ainsi qu'avec, en option, au moins une résine époxy sans groupes oxazolidinone, pour en faire une composition de résine époxy durcissable,

dans lequel procédé il y a au moins un composant de la composition qui contient un halogène ou du phosphore, ce qui fait que la composition durcie sera ignifugée.

16. Composition conforme à l'une des revendications 1 à 12, dans laquelle la résine époxy modifiée à groupes oxazolidinone contient un halogène ou du phosphore, ce qui réalise l'ignifugation.

17. Composition conforme à l'une des revendications 1 à 12, dans laquelle la résine époxy sans groupes oxazolidinone contient un halogène ou du phosphore, ce qui réalise l'ignifugation.

**18.** Composition conforme à la revendication 17, dans laquelle la résine époxy modifiée à groupes oxazolidinone ne contient pratiquement pas d'halogène ou de phosphore.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3738862 A
- US 4100364 A
- US 4456712 A
- JP 55160021 B
- JP 58138725 B
- US 4110364 A
- US 6645631 B
- WO 2005118604 A1
- EP 0384939 A
- EP 0384940 A
- EP 0408990 A
- DE 4308184 A
- DE 4308185 A
- DE 4308187 A
- WO 9607685 A
- WO 9607686 A
- WO 0142359 A
- WO 9015089 A
- US 4066628 A
- US 3313747 A
- US 4742146 A
- US 5189116 A
- WO 8700835 A
- US 5886134 A
- EP 298742 A
- US 3686 A
- US 359 A
- US 6127538 A
- EP 0954553 A
- US 4824919 A
- EP 927213 A
- WO 9810004 A


### Non-patent literature cited in the description


- Flame retardants 101 Basic Dynamics--Past efforts create future opportunities. Fire Retardants Chemicals Association. Baltimore Marriot Inner Harbour Hotel, 24 March 1996
- **H. E. Lee ; K. Neville.** Handbook of Epoxy Resins. McGraw-Hill, 1967